**Europäisches Patentamt**

**European Patent Office**

**Office européen des brevets**

(19)

(11) Veröffentlichungsnummer : **0 075 158 B1**

(12) **EUROPÄISCHE PATENTSCHRIFT**

(45) Veröffentlichungstag der Patentschrift :
21.11.85

(21) Anmeldenummer : 82108088.4

(22) Anmeldetag : 02.09.82

(51) Int. Cl.⁴ : **B 28 B 11/00, B 28 B 13/04**

(54) Gerät zum Auswaschen der Sichtfläche von frisch gepressten Waschbetonplatten.

(30) Priorität : 24.09.81 DE 3137925
28.04.82 DE 3215743

(43) Veröffentlichungstag der Anmeldung :
30.03.83 Patentblatt 83/13

(45) Bekanntmachung des Hinweises auf die Patenterteilung : 21.11.85 Patentblatt 85/47

(84) Benannte Vertragsstaaten :
AT BE FR IT NL

(56) Entgegenhaltungen :
DE-A- 1 584 558
DE-A- 1 683 774
DE-A- 2 059 455
DE-A- 2 323 834
DE-A- 2 826 632
US-A- 1 545 341

(73) Patentinhaber : HENKE Maschinenfabrik GmbH & Co. KG.
Osterkamp 55
D-4952 Porta Westfalica (DE)

(72) Erfinder : Hoffmann, Bodo
Paterberg 30
D-4973 Vlotho (DE)
Erfinder : Mattern, Herbert
Bachstrasse 9
D-4952 Porta Westfalica (DE)
Erfinder : Homburg, Wilhelm
Leipziger Strasse 9
D-4972 Löhne 4 (DE)

(74) Vertreter : Loesenbeck, Karl-Otto, Dipl.-Ing. et al
Jöllenbecker Strasse 164
D-4800 Bielefeld 1 (DE)

## Beschreibung

Die Erfindung betrifft ein Gerät zum Auswaschen der Sichtfläche von frisch gepreßten Waschbetonplatten, das eine ortsfeste Aufstellfläche für die während des Auswaschvorganges lotrecht stehenden Betonplatten sowie eine druckmittelgesteuerte Greifvorrichtung aufweist, die die Betonplatten nach dem Auswaschvorgang von der Aufstellfläche abhebt.

Bei bekannten Geräten dieser Art (vgl. DE-PS 23 02 276 und DE-GM 74 24 295) werden die Betonplatten nach dem Auswaschen der Sichtfläche mittels der Greifvorrichtung aufrechtstehend auf Paletten abgesetzt, die auf Rollenbahnen absatzweise vorwärtsbewegt werden.

Es hat sich nun gezeigt, daß in der Praxis manchmal ein flaches Ablegen von frisch gepreßten Betonplatten auf Paletten, Förderbahnen od. dgl. gewünscht wird.

Demzufolge liegt der Erfindung die Aufgabe zugrunde, ein Absetzgerät für frisch gepreßte Waschbetonplatten so auszubilden, daß die Betonplatten nach dem Auswaschen der Sichtfläche und dem Abheben von der Aufstellfläche der Auswaschstation mit der Sichtfläche nach oben gerichtet flach auf Paletten, Förderbahnen od. dgl. abgelegt werden können.

Eine Lösung dieser Aufgabe ist im kennzeichnenden Teil des Patentanspruches 1 wiedergegeben.

Bei dem so ausgebildeten Gerät werden die ausgewaschenen Betonplatten mittels der um nur etwa 5° aus der Vertikallage und zurück schwenkenden Greifvorrichtung der in der oberen Endlage befindlichen, d. h. um etwa 5° zur Vertikalen geneigten Übergabevorrichtung zugeführt. Danach wird die Übergabevorrichtung in die Horizontallage geschwenkt und gleichzeitig die Greifvorrichtung in ihre Vertikallage zurückbewegt, in welcher sie wieder eine oder zwei auf der Aufstellfläche der Auswaschstation abgestellte Betonplatten umgreift und spannt. Anschließend wird der Klemmkopf über die flach auf der Übergabevorrichtung liegende, mit der ausgewaschenen Sichtfläche nach oben gerichteten Betonplatte bewegt, die Betonplatte von den Greifern des Klemmkopfes seitlich erfaßt, leicht von der Übergabevorrichtung abgehoben, durch Horizontalverschiebung des Klemmkopfes aus dem Bereich der Übergabevorrichtung herausbewegt und schließlich auf einer mittels einer Förderbahn absatzweise vorbewegten Palette od. dgl. abgelegt, auf der sie bis nach vollständigem Abbinden der Betonmasse verbleibt.

Eine zweite Lösung der der Erfindung zugrunde liegenden Aufgabe ist dem kennzeichnenden Teil des Patentanspruchs 2 zu entnehmen.

Das erfindungsgemäße flache Ablegen von frisch gepreßten Waschbetonplatten hat zunächst den Vorteil, daß die Platten beim nachfolgenden Abbindeprozeß des Betons absolut ebenflächig bleiben, also kein Ausschuß entsteht.

Ferner ist es möglich, den Zementanteil in der Hinterbetonmasse geringer zu wählen als bisher, was bei der Massenfertigung eine beträchtliche Zementersparnis mit sich bringt.

Ein weiterer Vorteil besteht darin, daß die Hinterbetonmasse feuchter gehalten werden kann als bisher, was bedeutet, daß der in der Hinterbetonmasse enthaltene Zementanteil optimal ausgenutzt wird. Schließlich ist es nicht mehr notwendig, den Feuchtigkeitsgehalt von Vorsatz- und Hinterbetonmasse in so engen Grenzen zu halten, wie dies beim Hochkantabstellen der Betonplatten erforderlich ist, d. h. es werden an die Genauigkeit der Mischungsverhältnisse geringere Anforderungen gestellt.

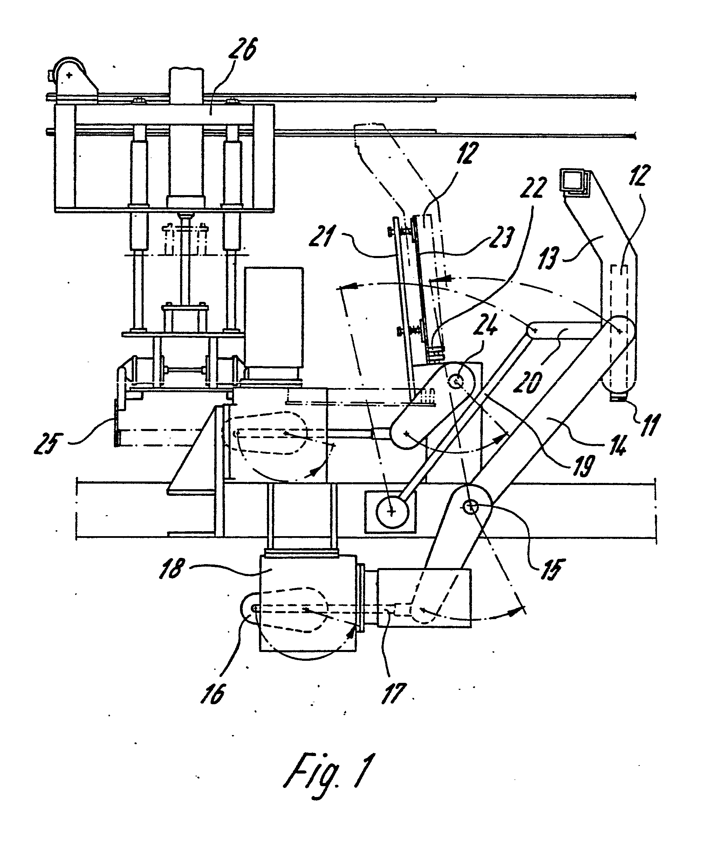

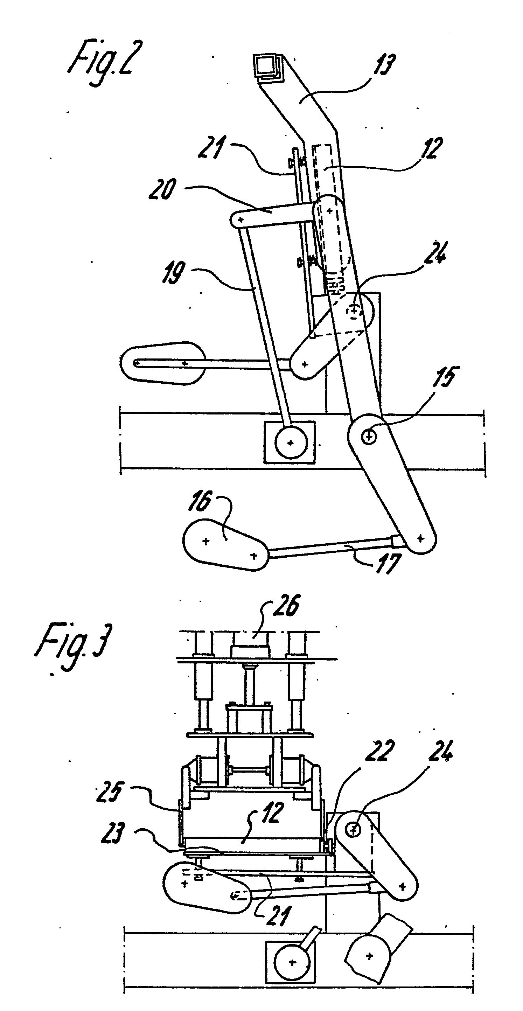

Schließlich hat die im Anspruch 2 gekennzeichnete Ausführungsform gegenüber der Ausführungsform nach Fig. 1 noch den Vorteil, daß der hin- und herbewegbare sowie heb- und senkbare Klemmkopf und dessen Steuerorgane in Fortfall kommen, was eine Vereinfachung und Verbilligung des Gerätes bedeutet.

In der Zeichnung ist die Erfindung an zwei Ausführungsbeispielen veranschaulicht.

Es zeigen :

Figur 1 die Seitenansicht eines Ausführungsbeispiels der Ablegeeinrichtung eines Gerätes zum Auswaschen der Sichtfläche von frisch gepreßten Waschbetonplatten,

Figur 2 eine Seitenansicht der Greifvorrichtung und der Übergabevorrichtung in der Übernahmestellung,

Figur 3 eine Seitenansicht der in der Horizontallage befindlichen Übergabevorrichtung mit darüber angeordnetem Klemmkopf,

Figuren 4 bis 6 drei unterschiedliche Durchlaufmöglichkeiten für die die ausgewaschenen Betonplatten aufnehmenden Flachpaletten durch das Auswaschgerät,

Figur 7 die Seitenansicht eines Auswaschgerätes, bei dem die Waschbetonplatten von der Übergabevorrichtung unmittelbar auf eine Abförderbahn geschoben werden,

Figur 8 einen senkrechten Längsschnitt durch das Gestell und die die Palettenzu- und -abförderbahn bildenden Gleitschienen,

Figur 9 den Längsschnitt nach Fig. 8, jedoch in einer anderen Lage der die Zuförderbahn bildenden Gleitschienen,

Figur 10 eine Draufsicht auf das Maschinengestell mit den Förderbahnen und der in Horizontallage befindlichen Übergabevorrichtung,

Figur 11 die Einzelheit bei B nach Fig. 8 bei in der Horizontallage befindlicher Übergabevorrichtung,

Figur 12 die Einzelheit nach Fig. 8, jedoch bei in der Aufnahmestellung befindlicher, mit einer Waschbetonplatte beschickter Übergabevorrichtung,

Figur 13 die Einzelheit nach Fig. 8 bei in Horizontallage befindlicher, eine Waschbetonplatte tragender Übergabevorrichtung,

Figur 14 einen Querschnitt nach der Linie A-A in Fig. 11.

Das Zuführen und lotrechte Aufstellen der auszuwaschenden, frisch gepreßten Waschbetonplatten 12 auf eine ortsfeste Aufstellplatte 11 (Fig. 1) des Auswaschgerätes erfolgt bei beiden Ausführungsbeispielen in an sich bekannter Weise, wie es beispielsweise in den Unterlagen der DE-PS 23 02 276 dargestellt und beschrieben ist.

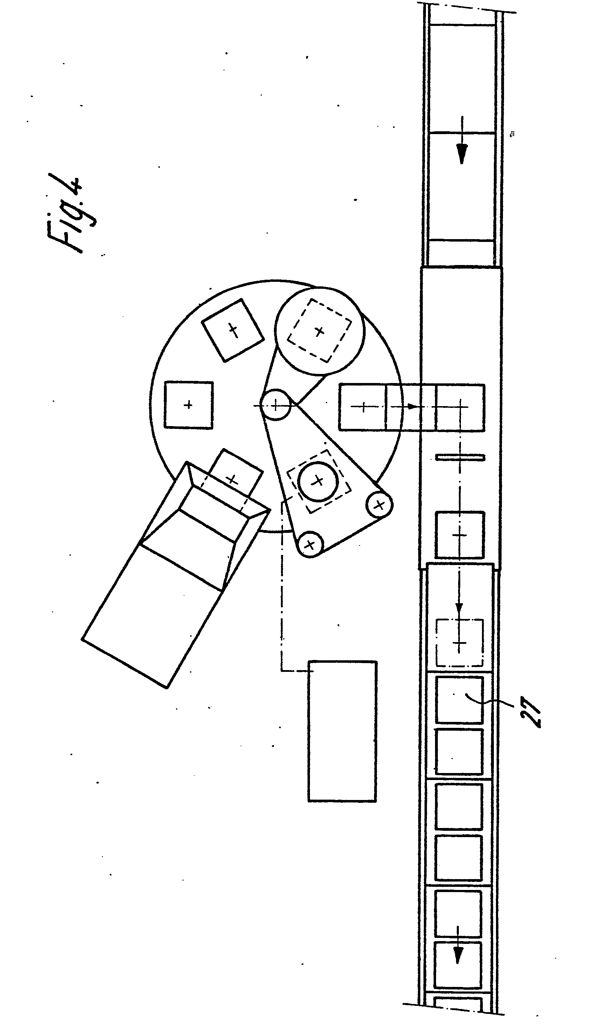

Die auf der Aufstellplatte 11 stehenden Betonplatten 12 werden während des Auswaschvorganges an beiden Seiten von den Leisten der Greifvorrichtung 13 (Fig. 1 und 3) abgedeckt und in der Vertikallage festgehalten.

Die Greifvorrichtung 13 wird von Hebeln 14 getragen, die um eine ortsfeste horizontale Achse 15 schwenkbar sind. Einer der Hebel 14 ist über die Schwenkachse 15 hinaus verlängert und durch einen Kurbeltrieb 16, 17 mit einem Druckmittel- oder mechanischen Antrieb 18 verbunden. Ferner ist die Greifvorrichtung 13 mit Lenkern 19 und 20 ausgestattet, die so gelagert und angeordnet sind, daß die zwischen den Klemmleisten der Greifvorrichtung eingespannten Betonplatten 12 beim Schwenken der Greifvorrichtung 13 aus der in Fig. 1 gezeigten Vertikalstellung bis gegen die Anlageplatte 23 der in der oberen Endlage befindlichen Übergabevorrichtung 21 bewegt werden, die um etwa 5° zur Lotrechten geneigt ist. Beim Lösen der Klemmleisten der Greifvorrichtung 13 stützen sich die nach unten gerichteten Schmalseiten der Betonplatten 12 auf einer Aufstelleiste 22 der Übergabevorrichtung 21 ab, die mit der Anlageplatte 23 einen rechten Winkel einschließt.

Die Übergabevorrichtung 21 ist als Ganzes um eine ortsfeste horizontale Achse 24 schwenkbar, und zwar beträgt der Schwenkwinkel dieser Vorrichtung etwa 85°, d. h. die Anlageplatte 23 ist in der oberen Endlage der Übergabevorrichtung 21 um etwa 5° zur Vertikalen geneigt, während sie sich in der anderen Endlage der Übergabevorrichtung in der Horizontallage befindet. Als Schwenkantrieb für die Übergabevorrichtung 21 wird ebenfalls ein Druckmittel- oder mechanischer Antrieb vorgesehen.

Die Aufstelleiste 22 der Übergabevorrichtung 21 ist in der Höhe verstellbar, während die Anlageplatte 23 abgefedert ist. Auf diese Weise ist in jedem Falle eine exakte und stoßfreie Übergabe der Waschbetonplatten von der schwenkbaren Greifvorrichtung 13 an die Übergabevorrichtung 21 sowie ein Ausgleich von etwaigen Plattenstärkenunterschieden gewährleistet.

Die Übergabevorrichtung 21 wird ebenso wie die Greifvorrichtung 13 im Arbeitsrhythmus des Gerätes gesteuert, und zwar wird die Übergabevorrichtung nach erfolgter Aufnahme einer oder zweier ausgewaschener Betonplatten aus der in den Fig. 1 und 2 dargestellten Lage in die in Fig. 3 gezeigte Horizontallage geschwenkt. Gleichzeitig wird die Greifvorrichtung 13 in die in Fig. 1 gezeigte Auswaschstation zurückbewegt.

Bei der Ausführungsform nach den Fig. 1 und 3 ist hinter der Übergabevorrichtung 21 ein in an sich bekannter Weise ausgebildeter, mit Klemmbacken 25 ausgestatteter Klemmkopf 26 in horizontaler Richtung hin- und herverschiebbar sowie begrenzt heb- und senkbar angeordnet.

Dieser Klemmkopf 26 hat die Aufgabe, die auf der in der Horizontallge befindlichen Platte 23 der Übergabevorrichtung 21 liegenden Betonplatten 12 zu umgreifen, sie von der Platte 23 abzuheben, seitlich aus dem Bewegungsbereich der Übergabevorrichtung 21 herauszubewegen und sie anschließend mit der ausgewaschenen Sichtfläche nach oben gerichtet flach auf einer Palette od. dgl. abzulegen.

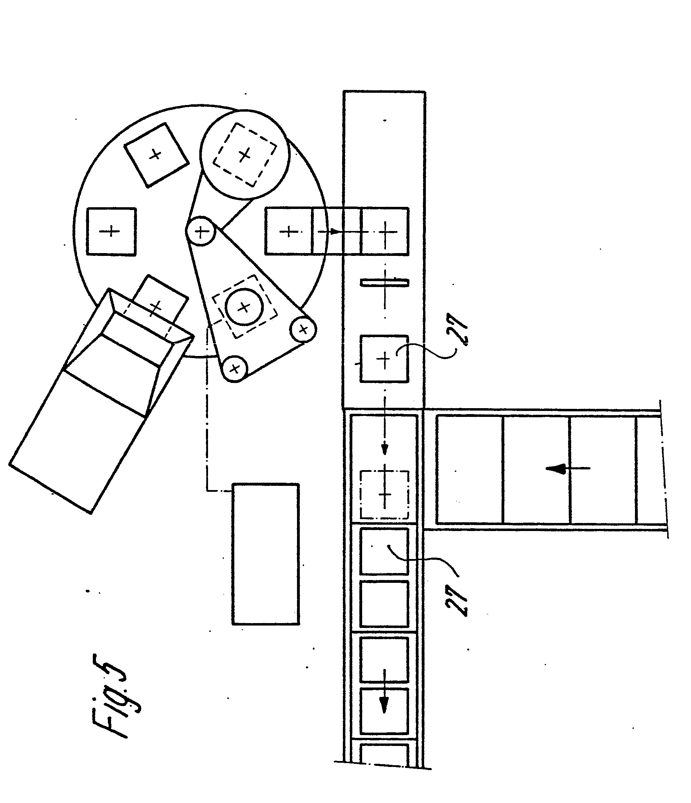

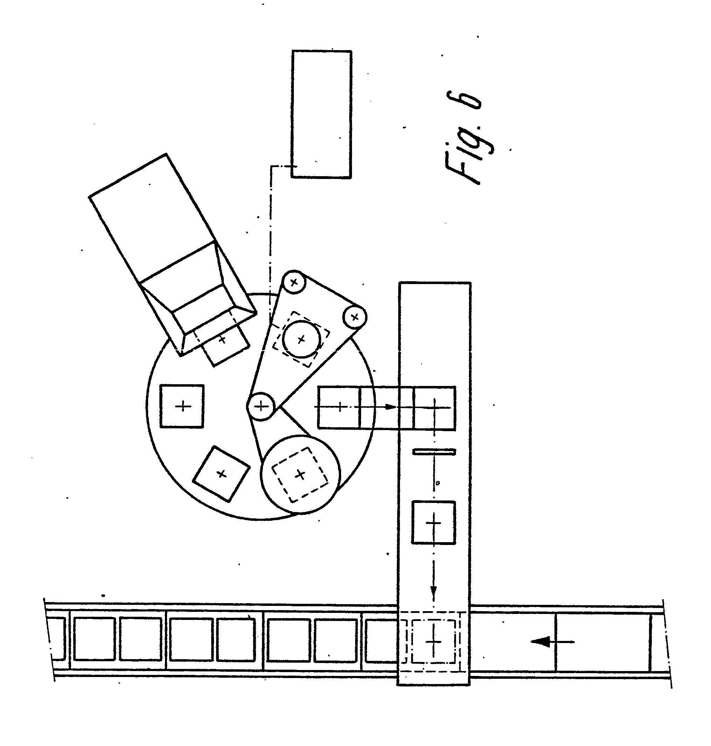

Die Ausgestaltung des Gerätes gemäß Fig. 1 bis 3 ermöglicht auch einen unterschiedlichen Durchlauf der die Betonplatten aufnehmenden Flachpaletten 27 durch das Auswaschgerät. So zeigt die Fig. 4 einen üblichen, geradlinigen Durchlauf der Flachpaletten 27 durch das Auswaschgerät, Fig. 5 eine Zuführung der leeren Flachpaletten 27 rechtwinklig zur Gerätachse, jedoch die Ableitung der gefüllten Tragpaletten 27 in Richtung der Gerätachse. Bei dieser Winkelübergabe wird ein Durchlauf der leeren Paletten 27 durch das Auswaschgerät vermieden. Schließlich zeigt die Fig. 6 eine Anordnung, bei der die Paletten 27 nur rechtwinklig zur Mittelachse des Auswaschgerätes bewegt werden. Dieser Anordnung kommt überall dort besondere Bedeutung zu, wo Flachablegeanlagen für Waschbetonplatten bereits vorhanden sind, in die ein Auswaschgerät für frisch gepreßte Waschbetonplatten mit einer hydraulischen Presse integriert werden muß.

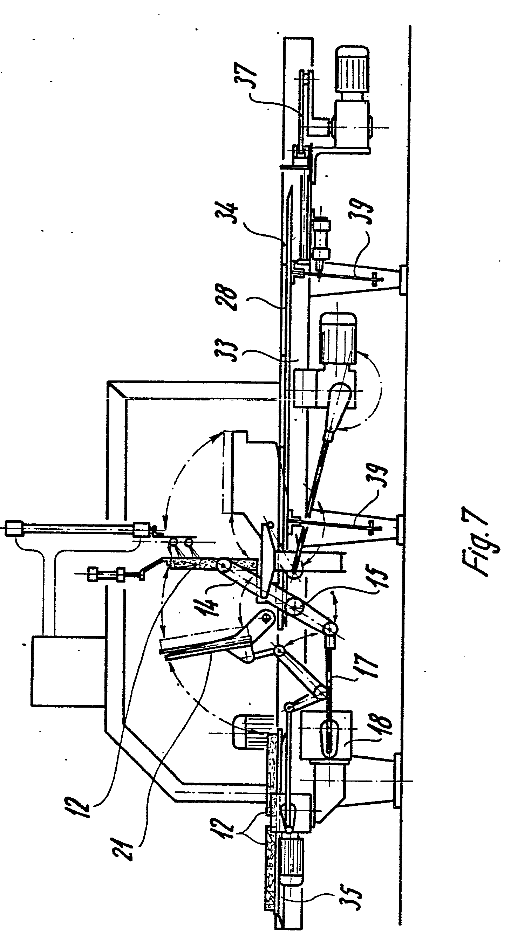

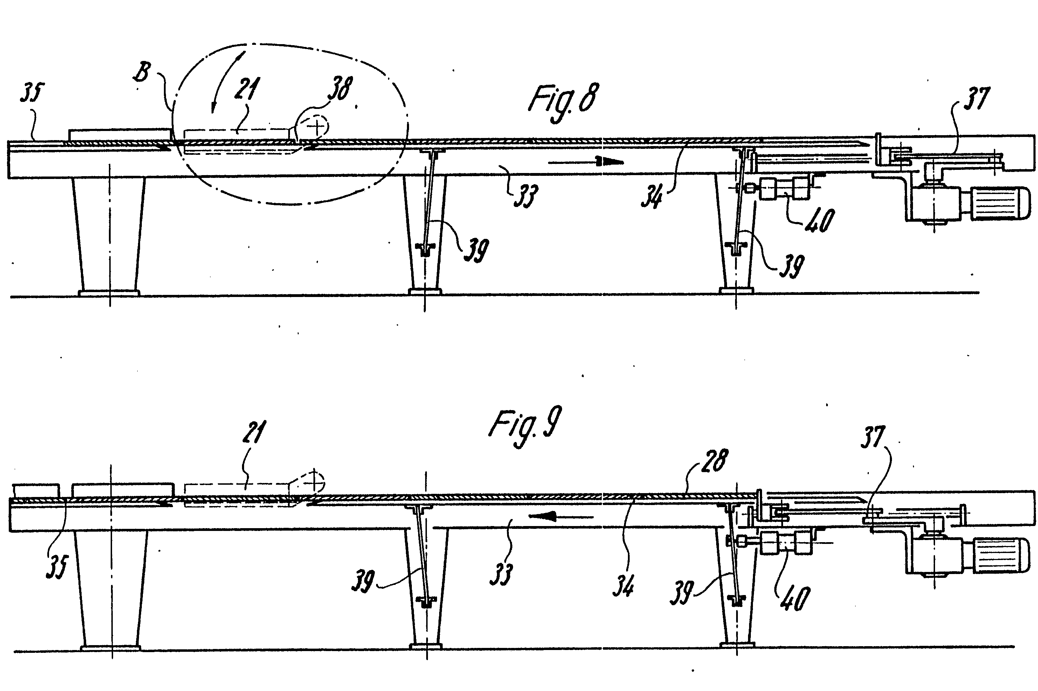

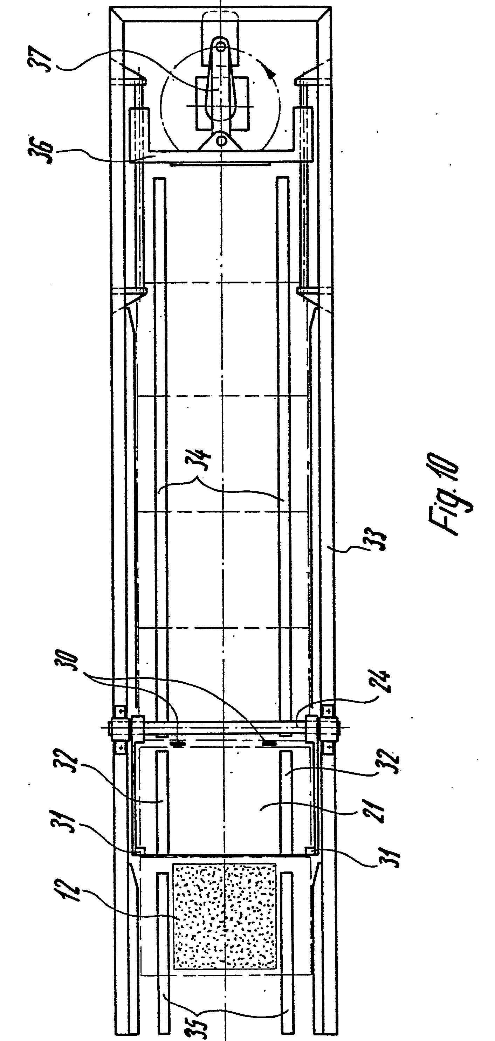

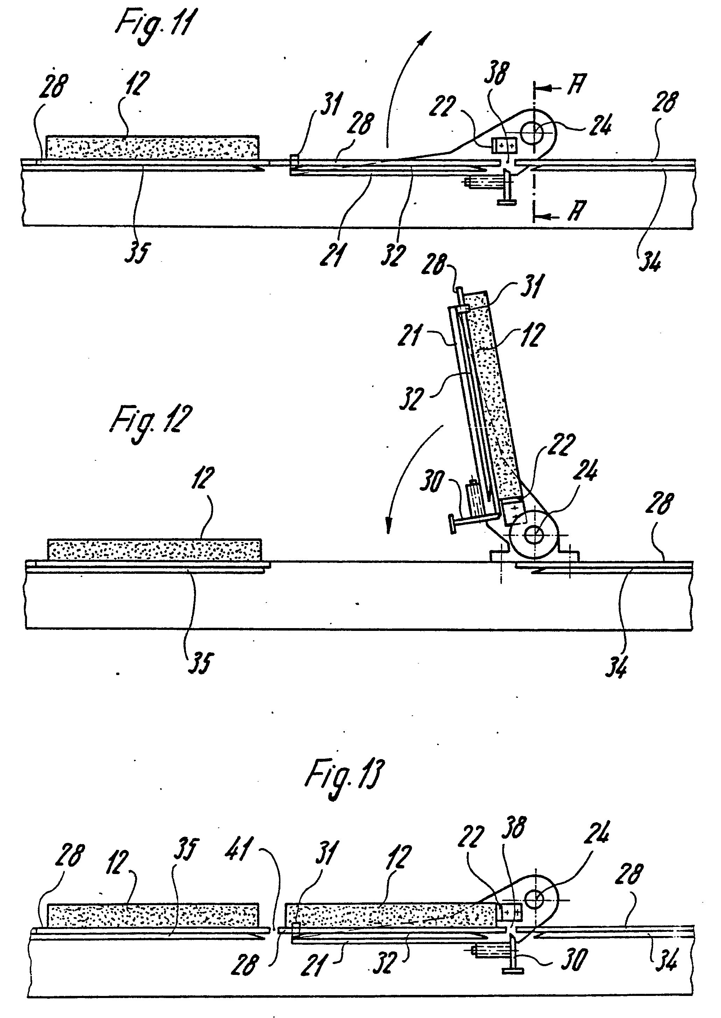

Die Fig. 7 bis 14 zeigen eine Ausführungsform des Gerätes, die keinen Klemmkopf 26 zum Abheben der Betonplatten 12 von der Übergabevorrichtung 21 sowie zum Ablegen derselben auf einer Abtransportvorrichtung aufweist; vielmehr ist bei dieser Ausführungsform die Übergabevorrichtung 21 mit quer zu ihrer Schwenkachse 24 verlaufenden Auflage- und Gleitflächen 32 für Paletten 28 sowie mit Haltemitteln für die relativ dünnwandigen, beidseitig ebenen Paletten 28 aus gegen Feuchtigkeit und Nässe unempfindlichem Werkstoff, wie beispielsweise Leichtmetallblech, Hartfasermaterial od. dgl., ausgestattet. Diese Paletten 28 dienen als Auflager für die ausgewaschenen Waschbetonplatten 12.

Gemäß Fig. 10 und 14 sind als Haltemittel für die Paletten 28 unter der der Schwenkachse 24 zugewandten Seite der Übergabevorrichtung 21 schwenkbare Hebel 30 angeordnet, die ständig unter der Einwirkung von Zugfedern 29 stehen und sich gemäß Fig. 14 bei in der Horizontallage befindlicher Übergabevorrichtung 21 auf am Gestell 33 befestigten Konsolen 42 abstützen. In dieser Stellung liegen die Hebel unterhalb der durch die Oberfläche der Gleitflächen 32 der Übergabevorrichtung 21 und die Gleitschienen 34 und 35 der Förderbahnen gebildeten Paletten-Vorschubebene.

Beim Hochschwenken der Übergabevorrichtung in die in Fig. 12 gezeigte Schräglage heben sich die Hebel 30 von den Konsolen 42 ab und schwenken durch die Spannung der Federn 29 in der in Fig. 14 angedeuteten Pfeilrichtung bis in die Paletten-Vorschubebene.

Als weitere Haltemittel für die Paletten 28 sind an den Seitenrändern der Übergabevorrichtung 21, und zwar in der Nähe ihrer der Schwenkachse 24 abgewandten Ecken, Halteklauen 31 vorgesehen, die die Paletten 28 seitlich übergreifen (vgl. Fig. 12 bis 14) und auf diese Weise beim Hochschwenken der Übergabevorrichtung 21 ein Abkippen der Paletten 21 von der Auflagefläche 32 der Übergabevorrichtung sicher verhindern.

Das die Auswaschvorrichtung, die Plattengreifvorrichtung und die Plattenübergabevorrichtung 21 tragende Gestell 33 weist eine durch zwei Gleitschienen 34 gebildete Zuförderbahn für die leeren Paletten 28 sowie eine ebenfalls durch zwei Gleitschienen 35 gebildete Abförderbahn für die mit Waschbetonplatten beschickten Paletten 28 auf.

Die Übergabevorrichtung 21 ist so ausgebildet und so im Gestell gelagert, daß deren Auflage- und Gleitflächen 32 in der Horizontallage mit den Gleitschienen 34 und 35 der beiden Förderbahnen in gleicher Horizontalebene liegen (vgl. Fig. 13). Dadurch ist die Möglichkeit gegeben, mit Hilfe eines am Aufgabeende der Gleitschienen 34 vorgesehenen, an einem beiderseits im Gestell geführten Querbalken 36 angreifenden Kurbeltriebes 37 die den Gleitschienen 34 entweder von Hand oder mechanisch zugeführten leeren Paletten 28 intermittierend vorzubewegen. Dabei wird die jeweils auf der Übergabevorrichtung 21 befindliche, eine ausgewaschene Waschbetonplatte 12 tragende Palette 28 zwangsläufig aus dem Bereich der Übergabevorrichtung 21 heraus bis auf die Gleitschienen 35 der Abförderbahn vorgeschoben und gleichzeitig eine nachfolgende leere Palette 28 bis auf die Übergabevorrichtung 21 vorbewegt.

Der Hub des Kurbeltriebes 37 wird jedoch etwas größer bemessen als die Länge der jeweils vorzuschiebenden Paletten, denn die auf den Schienen 34 der Zuförderbahn befindlichen Paletten 28 müssen nach jedem Vorschub um ein gewisses Maß rückläufig bewegt werden, so daß zwischen den auf der Übergabevorrichtung 21 liegenden Paletten 28 und der nachfolgenden Palette ein Freiraum 38 entsteht, der es ermoglicht, die Hebel 30 bei Beginn des Hochschwenkens der Übergabevorrichtung 21 bis hinter bzw. unter die auf der Übergabevorrichtung 21 befindliche Palette 28 einschwenken zu lassen (vgl. Fig. 11 und 12).

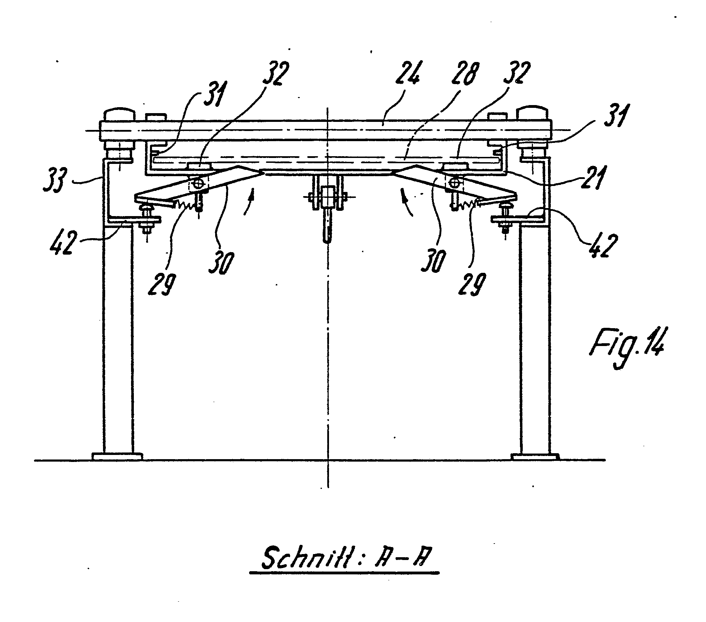

Zwecks Erzielung dieser rückläufigen Bewegung der Gleitschienen 34 stützen diese sich auf im Gestell 33 gelagerten federnden Flachstäben 39 ab, wobei die dem Palettenaufgabeende zugewandten Stäbe 39 mit einem Druckmittelantrieb 40 gekuppelt sind, der eine Längsbewegung der Gleitschienen 34 aus der in den Fig. 7 und 8 gezeigten Lage in die in Fig. 9 gezeigte Lage und umgekehrt gestattet.

Der Palettenvorschub durch den Kurbeltrieb 37 erfolgt in der in Fig. 9 gezeigten Lage der Gleitschienen 34. Dabei ist zwischen den auf den Gleitschienen 34, den Gleitflächen 32 der Übergabevorrichtung und den Schienen 35 der Abförderbahn kein Luftspalt vorhanden. Nach diesem Palettenvorschub wird der Kurbelantrieb 37 in die in Fig. 8 gezeigte Ausgangsstellung zurückbewegt. Gleichzeitig werden auch die Gleitschienen 34 durch Umsteuerung des Druckmittelantriebes 40 rückläufig in die in Fig. 8 gezeigte Lage bewegt, so daß zwischen der jeweils auf der Übergabevorrichtung 21 befindlichen Palette 28 und der jeweils nachfolgenden Palette 28 zwangsläufig der erforderliche Freiraum für die Hebel 30 vorhanden ist.

Beim nachfolgenden Hochschwenken der Übergabevorrichtung 21 in die in den Fig. 7 und 12 gezeigte Schräglage gleitet die auf der Übergabevorrichtung 21 befindliche Palette 28 um ein geringes Maß nach unten, so daß ihre jetzt unten liegende Kante auf den durch die Federn 29 bis unter die Palettenkante geschwenkten Hebeln 30 ruht.

Nach erfolgter Aufnahme einer ausgewaschenen Betonplatte 12 aus der Greifvorrichtung 13 (Fig. 1 und 2) wird die Übergabevorrichtung 21 wieder in die in Fig. 3 gezeigte Horizontallage zurückgeschwenkt. Jetzt ist auch zwischen der beladenen Palette 28 und der vor dieser auf der Abförderbahn 35 befindlichen, vorher beladenen Palette 28 ein geringer Freiraum 41 vorhanden, weil sich die auf der Übergabevorrichtung befindliche Palette zuvor beim Hochschwenken etwas rückläufig bis auf die Hebel 30 bewegt hatte. Auf diese Weise ist sichergestellt, daß sich die benachbarten Ränder der vorerwähnten beladenen Paletten 28 beim Abschwenken der Übergabevorrichtung 21 in die Horizontallage nicht berühren können.

Damit nun beim nachfolgenden Palettenvorschub durch den Kurbelantrieb 37 die beladenen Paletten mit ihren dem Freiraum 38 zugewandten Rändern sanft und nicht schlagartig, aufeinandertreffen, was ein Verrutschen der noch nicht abgebundenen Waschbetonplatten auf den Paletten oder gar Beschädigungen derselben zur Folge haben könnte, läuft der Kurbeltrieb 37 zu Beginn des Vorwärtshubes mit einer Schleichdrehzahl an.

Naturgemäß sind die Ausführungsmöglichkeiten der Erfindung durch die dargestellten Ausführungsbeispiele nicht erschöpft. So ist es beispielsweise möglich, bei dem Ausführungsbeispiel nach Fig. 7 bis 14 an der Übergabevorrichtung 21 anders geartete Haltemittel für die Paletten 28 vorzusehen, wie es auch möglich ist, anstelle des zum Palettenvorschub dienenden Kurbeltriebes 37 einen anders gearteten, beispielsweise einen Druckmittelantrieb, vorzusehen.

**Patentansprüche**

1. Gerät zum Auswaschen der Sichtfläche von frisch gepreßten Waschbetonplatten (12), das eine ortsfeste Aufstellfläche (11) für die während des Auswaschvorganges lotrecht stehenden Betonplatten (12) sowie eine druckmittelgesteuerte Greifvorrichtung (13) aufweist, die die Betonplatten nach dem Auswaschvorgang von der Aufstellfläche (11) abhebt, dadurch gekennzeichnet, daß der Greifvorrichtung (13) eine um etwa 85° aus der Horizontallage aufwärts und wieder in die Horizontallage zurück verschwenkbare Übergabevorrichtung (21) nachgeordnet ist, die eine Aufstelleiste (22) und eine Anlageplatte (23) für die Betonplatten aufweist, und daß der Übergabevorrichtung (21) ein sowohl horizontal hin und her bewegbarer als auch begrenzt heb- und senkbarer Klemmkopf (26) zum Abheben der Betonplatten von der Übergabevorrichtung (21) und zum Ablegen derselben auf einer Abtransportvorrichtung nachgeordnet ist.

2. Gerät zum Auswaschen der Sichtfläche von frisch gepreßten Waschbetonplatten (12), das eine ortsfeste Aufstellfläche (11) für die während des Auswaschvorganges lotrecht stehenden Betonplatten (12) sowie eine druckmittelgesteuerte Greifvorrichtung (13) aufweist, die die Betonplatten nach dem Auswaschvorgang von der Aufstellfläche (11) abhebt, dadurch gekennzeichnet, daß der Greifvorrichtung (13) eine um etwa 85° aus der Horizontallage aufwärts und wieder in die Horizontallage zurück verschwenkbare Übergabevorrichtung (21) nachgeordnet ist, die eine Aufstelleiste (22) für die Betonplatten, ferner Auflage- und Gleitflächen (32) sowie Haltemittel (30 und 31) für eine die Betonplatten aufnehmende Palette (28) aufweist, daß ferner im Gestell (33) des Gerätes unterhalb der Auswaschstation horizontal verlaufende, eine Zuförderbahn für unbeladene Paletten bildende Gleitschienen (34) sowie eine ebenfalls durch Gleitschienen (35) gebildete Abförderbahn für mit Betonplatten beladene Paletten (28) vorgesehen ist und daß die Auflage- und Gleitflächen (32) der Übergabevorrichtung (21) in der Horizontallage der Übergabevorrichtung mit den Gleitschienen (34 und 35) der beiden Förderbahnen im gleicher Horizontalebene liegen.

3. Gerät nach Anspruch 1 oder 2, dadurch gekennzeichnet, daß die Aufstelleiste (22) der Übergabevorrichtung (21) in der Höhe verstellbar ist.

4. Gerät nach Anspruch 1, dadurch gekennzeichnet, daß die Anlageplatte (23) der Übergabevorrichtung (21) abgefedert ist.

5. Gerät nach Anspruch 1 oder 2, dadurch gekennzeichnet, daß die Greifvorrichtung (13) von Hebeln (14) getragen ist, die um eine ortsfeste horizontale Achse (15) schwenkbar sind, wobei mindestens ein Hebel (14) über die Schwenkachse (15) hinaus verlängert und der verlängerte Arm des Hebels durch einen Kurbeltrieb (16, 17) mit einem Druckmittelantrieb (18) od. dgl. verbunden ist.

6. Gerät nach Anspruch 1 oder 2 und 5, dadurch gekennzeichnet, daß die Greifvorrichtung (13) mit Lenkern (19 und 20) ausgestattet ist, die so bemessen, gelagert und angeordnet sind, daß beim Schwenken der Greifvorrichtung (13) aus der Auswaschstation in Richtung zur Übergabevorrichtung (21) die in der Greifvorrichtung gespannten Betonplatten zunächst leicht von der Aufstellfläche (11) abgehoben, dann um etwa 5° aus der Vertikallage in eine leichte Schräglage verschwenkt werden, die der Lage der Aufstelleiste (22) und der Lage der Anlageplatte (23) der in der oberen Endlage befindlichen Übergabevorrichtung (21) entspricht.

7. Gerät nach Anspruch 2, dadurch gekennzeichnet, daß am Aufgabeende der Palettenzuförderbahn im Gestell (33) ein Querbalken (36) in Förderrichtung der Paletten (28) mittels eines mechanischen oder eines druckmittelgesteuerten Antriebes bewegbar angeordnet ist.

8. Gerät nach Anspruch 2 und 7, dadurch gekennzeichnet, daß als Antrieb für den Querbalken (36) ein Kurbelantrieb (37) vorgesehen ist.

9. Gerät nach Anspruch 2, 7 und 8, dadurch gekennzeichnet, daß der Kurbelantrieb (37) bei Beginn des Arbeitshubes mit einer Schleichdrehzahl umläuft.

10. Gerät nach Anspruch 2 und 7 bis 9, dadurch gekennzeichnet, daß der Arbeitshub des Kurbeltriebes (37) etwas größer bemessen ist als die Läng eder jeweils vorzuschiebenden Paletten (28).

11. Gerät nach Anspruch 2, dadurch gekennzeichnet, daß als Haltemittel für die bei Schräglage der Übergabevorrichtung (21) unten liegende Palettenkante federbelastete Hebel (30) oder andere, in und aus dem Bereich dieser Palettenkante bewegbare Stützelemente vorgesehen sind.

12. Gerät nach Anspruch 2 und 11, dadurch gekennzeichnet, daß die Übergabevorrichtung (21) an ihren Seitenkanten in der Nähe ihrer der Schwenkachse (24) abgewandten Ecken Halteklauen (31) trägt, die die Palette (28) in der Nähe ihrer oben liegenden Ecken beiderseits übergreifen.

13. Gerät nach Anspruch 2, dadurch gekennzeichnet, daß die die Palettenzuförderbahn bildenden Gleitschienen (34) in Längsrichtung begrenzt hin und her bewegbar sind.

14. Gerät nach Anspruch 2 und 13, dadurch gekennzeichnet, daß sich die die Zuförderbahn bildenden Gleitschienen (34) auf im Gestell (33) gelagerten Stäben (39) abstützen, wobei zwei nebeneinander liegende Stäbe (39) mit einem im Arbeitsrhythmus des Gerätes gesteuerten Druckmittelantrieb (40) verbunden sind.

15. Gerät nach Anspruch 2, 13 und 14, dadurch gekennzeichnet, daß die Stäße (39) als federnde Flachstäbe ausgebildet sind.

**Claims**

1. Apparatus for washing out the visible surface of freshly pressed wash concrete slabs (12), which has a stationary support surface (11) for the concrete slabs (12) which are disposed in a perpendicular position during the washing operation, and a pressure fluid-controlled gripping means (13) which lifts the concrete slabs from the support surface (11) after the washing operation, characterised in that disposed downstream of the gripping means (13) is a transfer means (21) which can be pivoted through about 85° from the horizontal position upwardly and back into the horizontal position again and which has a support bar (22) and a contact plate (23) for the concrete slabs, and that disposed downstream of the transfer means (21) is a clamping head (26) which is horizontally reciprocable and which can also be limitedly raised and lowered, for lifting the concrete slabs from the transfer means (21) and for depositing same on a removal conveyor means.

2. Apparatus for washing out the visible surface of freshly pressed wash concrete slabs (12), which has a stationary support surface (11) for the concrete slabs (12) which are disposed in a perpendicular position during the washing operation, and a pressure fluid-controlled gripping means (13) which lifts the concrete slabs from the support surface (11) after the washing operation, characterised in that disposed downstream of the gripping means (13) is a transfer means (21) which can be pivoted through about 85° from the horizontal position upwardly and back into the horizontal position again and which has a support bar (22) for the concrete slabs, and also bearing and sliding surfaces (32) as well as holding means (30 and 31) for a pallet (28) for accommodating the concrete slabs, that provided in the frame (33) of the apparatus, beneath the washing station, are horizontally extending slide rails (34) forming a feed track for non-loaded pallets, and a removal conveyor track also formed by slide rails (35), for pallets (28) loaded with concrete slabs, and that the bearing and sliding surfaces (32) of the transfer means (21), in the horizontal position of the transfer means, lie in the same horizontal plane with the slide rails (34 and 35) of the two conveyor tracks.

3. Apparatus according to claim 1 or claim 2 characterised in that the support bar (22) of the transfer means (21) is adjustable in respect of height.

4. Apparatus according to claim 1 characterised in that the contact plate (23) of the transfer means (21) is sprung.

5. Apparatus according to claim 1 or claim 2 characterised in that the gripping means (13) is carried by levers (14) which are pivotable about a stationary horizontal axis (15), wherein at least one lever (14) is extended beyond the pivot axis (15) and the elongated arm of the lever is connected by a crank transmission (16, 17) to a pressure fluid drive (18) or the like.

6. Apparatus according to claim 1 or 2 and 5 characterised in that the gripping means (13) is provided with links (19 and 20) which are so dimensioned, mounted and arranged that, upon pivotal movement of the gripping means (13) out of the washing station towards the transfer means (21), the concrete slabs which are gripped in the gripping means are firstly lifted slightly from the support surface (11), and then pivoted through about 5° from the vertical position into a slightly inclined position which corresponds to the position of the support bar (22) and the position of the contact plate (23) of the transfer means (21) when it is in its upper limit position.

7. Apparatus according to claim 2 characterised in that a transverse beam (36) is arranged at the delivery end of the pallet feed conveyor track in the frame (33), being movable in the direction of conveying movement of the pallets (28) by means of a mechanical or a pressure fluid-controlled drive.

8. Apparatus according to claim 2 and claim 7 characterised in that a crank drive (37) is provided as the drive for the transverse beam (36).

9. Apparatus according to claim 2, claim 7 and claim 8 characterised in that the crank drive (37) rotates at a creep speed of rotation at the beginning of the working stroke.

10. Apparatus according to claim 2 and claims 7 to 9 characterised in that the working stroke of the crank transmission (37) is somewhat greater than the length of the respective pallets (28) to be pushed forward.

11. Apparatus according to claim 2 characterised in that the holding means for the pallet edge which is at the bottom in the inclined position of the transfer means (21) is formed by springloaded levers (30) or other support elements which are movable into and out of the region of said pallet edge.

12. Apparatus according to claim 2 and claim 11 characterised in that at its side edges, in the vicinity of its corners which are remote from the pivot axis (24), the transfer means (21) carries holding claws (31) which engage over the pallet (28) in the vicinity of its upward corners on both sides thereof.

13. Apparatus according to claim 1 characterised in that the slide rails (34) forming the pallet feed conveyor track are limitedly reciprocable in the longitudinal direction.

14. Apparatus according to claim 2 and claim 13 characterised in that the slide rails (34) forming the feed conveyor track are supported on bars (39) mounted in the frame (33), wherein two juxtaposed bars (39) are connected to a pressure fluid drive (40) which is controlled in the working rhythm of the apparatus.

15. Apparatus according to claim 2, claim 13 and claim 14 characterised in that the bars (39) are in the form of flat spring bars.

**Revendications**

1. Appareil pour laver la surface visible des plaques de béton lavé fraîchement compactées présentant une surface de mise en place (11) fixe pour les plaques de béton (12) qui sont placées en position verticale pendant le processus de nettoyage, ainsi qu'un dispositif de préhension (13) commandé par fluide sous pression qui, après le lavage, soulève les plaques de béton de la surface de mise en plaque (11), caractérisé en ce que le dispositif de préhension (13) est placé derrière un dispositif de transfert (21) qui est apte à pivoter vers le haut à partir de la position horizontale d'environ 85° et à retourner à la position horizontale, qui est muni d'une barre de mise en place (22) et d'une plaque d'appui (23) pour les plaques de béton et en ce que le dispositif de transfert (21) est disposé derrière une tête de serrage (26) qui est apte à se déplacer aussi bien horizontalement, en un mouvement de va-et-vient, que verticalement, mais d'une façon plus limitée, afin de soulever les plaques de béton du dispositif de transfert (21) et de les déposer sur une dispositif d'évacuation.

2. Appareil pour laver la surface visible des plaques de béton lavé fraîchement compactées présentant une surface de mise en place (11) fixe pour les plaques de béton (12) qui sont placées en position verticale pendant le processus de nettoyage, ainsi qu'un dispositif de préhension (13) commandé par fluide sous pression qui, après le lavage, soulève les plaques de béton de la surface de mise en place (11), caractérisé en ce que le dispositif de préhension (13) est placé derrière un dispositif de transfert (21) qui est apte à pivoter vers le haut à partir de la position horizontale d'environ 85° et à retourner à la position horizontale, qui est muni d'une barre de mise en place (22) et d'une plaque d'appui pour les plaques de béton et aussi de surfaces d'appui et de glissement (32) et également de moyens de retenue (30 et 31) pour une palette (28) recevant les plaques de béton, en ce qu'est prévue en outre une voie de transport horizontale dans le bâti (33) de l'appareil passant sous la station de lavage formée de glissières (34) pour amener les palettes non chargées et également une voie de transport formée elle aussi de glissières (35) pour évacuer les palettes (28) chargées de plaques de béton, et en ce que les surfaces d'appui et de glissement (32) du dispositif de transfert (21) sont, lorsque le dispositif de transfert est en position horizontale, dans le même plan horizontal que les glissières (34 et 35) des deux voies de transport.

3. Appareil selon l'une des revendications 1 ou 2, caractérisé en ce que la barre de mise en place (22) du dispositif de transfert (21) est réglable en hauteur.

4. Appareil selon la revendication 1, caractérisé en ce que la plaque d'appui (23) du dispositif de transfert (21) est montée sur ressorts.

5. Appareil selon l'une des revendications 1 ou 2, caractérisé en ce que le dispositif de préhension (13) est soutenu par des leviers (14) qui sont aptes à pivoter autour d'un axe horizontal fixe (15), au moins un levier (14) se prolongeant au-delà de l'axe de rotation (15) et le bras prolongé du levier étant relié à un dispositif d'entraînement par fluide sous pression (18) ou similaire au moyen d'un mécanisme bielle-manivelle (16, 17).

6. Appareil selon l'une des revendications 1 ou 2 et 5, caractérisé en ce que le dispositif de préhension (13) est équipé de biellettes (19 et 20) qui sont dimensionnées, montées et disposées de façon que, lorsque le dispositif (13) de préhension pivote de la station de lavage en direction du dispositif de transfert (21), les plaques de béton serrées dans le dispositif de préhension soient soulevées tout d'abord légèrement de la surface de mise en place (11), puis déplacées d'environ 5° à partir de la position verticale, dans une position légèrement inclinée qui correspond à la position de la barre de mise en place (22) et à la position de la plaque d'appui (23) se trouvant alors dans sa position verticale extrême.

7. Appareil selon la revendication 2, caractérisé en ce qu'à l'extrémité de chargement de la voie d'approvisionnement en palettes une traverse (36) est montée déplaçable dans le bâti (33) dans le sens de l'entraînement des palettes (28) au moyen d'un dispositif d'entraînement mécanique ou piloté par fluide sous pression.

8. Appareil selon les revendications 2 et 7, caractérisé en ce que, pour l'entraînement de la traverse (36), une transmission par bielle-manivelle (37) est prévue.

9. Appareil selon les revendications 2, 7 et 8, caractérisé en ce que l'entraînement par bielle-manivelle (37) est mis en marche au début de la course de travail avec une vitesse de rotation réduite.

10. Appareil selon les revendications 2 et 7 à 9, caractérisé en ce que la course de l'entraînement par bielle (37) est calculée pour être plus grande que la longueur des palettes (28) devant être déplacées.

11. Appareil selon la revendication 2, caractérisé en ce que, comme moyens de retenue pour les bords inférieurs des palettes lors de la position inclinée du dispositif de transfert (21), sont prévus des leviers sollicités par ressorts (30) ou d'autres éléments d'appui déplaçables dans et hors de la zone de ces bords de palettes.

12. Appareil selon les revendications 2 et 11, caractérisé en ce que, le dispositif de transfert (21) porte sur ses bords latéraux, à proximité des angles opposés à l'axe de rotation (24), des griffes de maintien (31) qui saisissent la palette (28) des deux côtés, à proximité des angles se trouvant placés en haut.

13. Appareil selon la revendication 2, caractérisé en ce que les glissières (34) formant la voie d'amenée des palettes sont déplaçables en direction longitudinale dans un mouvement alternatif avant-arrière limité.

14. Appareil selon les revendications 2 et 13, caractérisé en ce que les glissières (34) formant la voie de chargement s'appuient sur des barres (39) montées dans le bâti (33), deux barres (39) placées côte à côte étant reliées à un mécanisme d'entraînement par fluide sous pression (40) piloté au même rythme que l'appareil.

15. Appareil selon les revendications 2, 13 et 14, caractérisé en ce que les barres (39) sont conformées en barres plates faisant ressort.

Fig. 1

0 075 158

Fig.2

Fig.3

2

Fig.4

3

Fig. 5

0 075 158

Fig. 6

Fig. 7

Fig. 8

Fig. 9

0 075 158

0 075 158

Fig. 10

Fig. 11

Fig. 12

Fig. 13

Fig. 14

Schnitt : A—A